# EUROPEAN PATENT SPECIFICATION

(11) **EP 0 584 434 B1**
(45) Date of publication and mention of the grant of the patent: **12.07.1995**
(21) Application number: 92830442.7
(22) Date of filing: 10.08.1992
(51) Int. Cl.: F16K 41/10

(54) **Doubly-contained high purity valve**
Doppelwandiges hochreines Ventil
Robinet à soupape ultra pure à double paroi

(43) Date of publication of application: 02.03.1994
(73) Proprietor: SAES PURE GAS, Inc., San Luis Obispo, CA 93401 (US)
(72) Inventor: Hendry, Ronald G, Los Osos CA 93402 (US); Nichols, Joseph H, SanLuis Obispo CA 93401 (US)
(74) Representative: Adorno, Silvano

(56) References cited:
- DE-A- 3 825 575
- DE-B- 1 202 085
- FR-A- 1 249 396
- US-A- 2 691 773
- CARTEN SYSTEMS INC. 'Carten Introduces a true dual containment valve' May 1988
- , MIDDLEBURY, CONNECTICUT Catalog nr. dc250-035-316l-500

## Description

The present invention is in the field of high purity valves and more particularly relates to a valve according to the preamble of claim 1 in which the fluid is doubly contained to permit leaks to be detected before the fluid escapes into the environment and to prevent such escape. Such a valve is known from US-2 691 773. The valve of the present invention would ordinarily be used for controlling the flow of highly flammable or highly toxic fluids, or fluids that are highly detrimental to the environment.

The present invention is an improvement to a sophisticated type of valve used in applications where the fluid flowing through the valve must be maintained at a very high level of purity and therefore must not become contaminated by the materials used in the valve. Accordingly, the valve does not use packing material or O-ring seals. Instead, a sealing member that is moved into and out of sealing engagement with a valve seat is attached to one end of a bellows that accommodates its motion. In this manner, all of the surfaces wetted by the fluid (with the exception of the sealing member itself) are composed of metal, typically type 316L or 321 stainless steel. When used within their rated values, such valves are very reliable and effective in preventing contamination of the fluid. Such valves are often used in the semiconductor industry where extreme purity of the gases is vital.

Notwithstanding the high reliability and quality of these high purity valves, there are situations in which no leakage of the fluid into the atmosphere can be tolerated. For example, an accumulated leakage of gaseous hydrogen could destroy an entire factory. For these extremely hazardous applications, a technique referred to as double containment has been developed within the industry. The concept is to enclose all parts of the system in which hazardous fluids are employed by an outer shell that contains any leaked fluid. To this end, coaxial tubing, elbows, and other components have been developed.

A brochure of Carten Systems, Inc. of Middlebury, Connecticut shows their catalog number DC 250-035-316L-500, which is a doubly contained diaphragm valve. This is a different type of valve from that of the present invention and, unlike the present invention, the Carten valve does not use bellows.

It was by no means clear that a double-containment technique could be found for use with valves that employ bellows, and the existence of a doubly-contained diaphragm valve was of little help because the amount of travel in a bellows valve is many times greater than that in the diaphragm valve. Thus, there was practically no prior art on which the present inventors could draw for a solution to the problem of creating a doubly contained high purity bellows type valve.

The objective of the present invention is to provide a doubly-contained high purity bellows type valve.

In accordance with the present invention, this is accomplished by providing an outer shell that surrounds the body of the valve and that has an aperture that is aligned with the aperture of the valve body through which the control rod extends, in combination with a second bellows that extends coaxially within the bellows of the valve and that connects the outer shell to the sealing member. In this way, the outer shell and the second bellows completely enclose the body and first bellows of the valve.

It is important to bear in mind that the type of seal which the present invention provides includes two walls of metal between the fluid and the ambient air, except for the sealing member itself. That is to say, the hazardous fluid must penetrate through two walls of metal before it can reach the atmosphere.

The double containment permits a leak in the valve to be detected and corrected before any of the hazardous fluid reaches the atmosphere. In a first way of using the valve, the space between the two walls of metal is maintained at a reduced pressure by means of a vacuum pump, and if there is even a tiny opening in the valve, a trace of the hazardous fluid will be drawn into the evacuated chamber between the metal walls where it can be detected and drawn away by the vacuum pump.

In a second way of using the present invention, the space between the two metal walls is maintained at a higher pressure than the hazardous fluid, so that if a tiny opening develops in the valve, the pressurizing gas will prevent the hazardous gas from leaking out, and instead, the pressurizing gas, which may be pure and inert, will force its way into the inner chamber where the hazardous fluid is, and will be detected there.

Thus, it can be appreciated that the doubly-contained structure permits the detection of leakage long before any of the hazardous fluid reaches the atmosphere.

The novel features which are believed to be characteristic of the invention and its structure together with further objects and advantages thereof, will be better understood from the following description considered in connection with the accompanying drawings in which a preferred embodiment of the invention is illustrated by way of example. It is to be expressly understood, however, that the drawings are for the purpose of illustration and description only and are not intended as a definition of the limits of the invention.
Figure 1 is a diagram showing a cross sectional elevational view of a high purity bellows type valve known in the prior art;
Figure 2 is a diagram showing a cross sectional elevational view of a double-containment high purity bellows valve in accordance with the present invention; and,
Figure 3 is a fractional cross sectional view showing a stem closure portion in accordance with a preferred embodiment of the present invention.

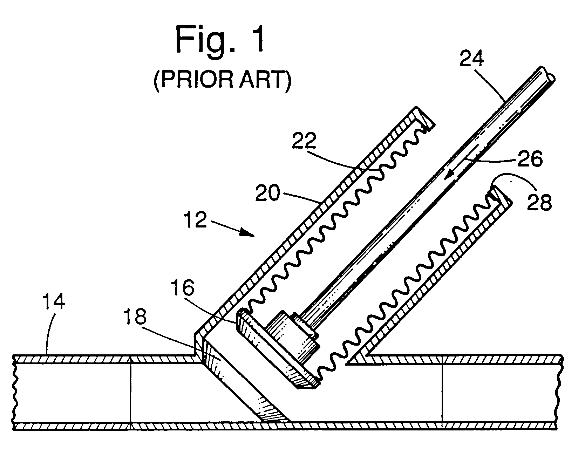

Figure 1 is a diagram showing in simplified form a high purity bellows valve 12 of a type known in the art and manufactured by the assignee of the present invention. The valve 12 is shown installed in a pipe 14.

In its simplest form, as shown in Figure 1, the valve 12 includes a sealing member 16 that sealingly engages the seat 18 to shut off the flow through the pipe 14.

The sealing member 16 is forced into a sealing engagement with the seat 18 by movement the control rod 24 in the direction of the arrow 26. Motion of the control rod 24 may be produced by rotation of a hand wheel or by action of a pneumatic actuator.

To accommodate the motion of the sealing member 16, while still maintaining a closed system, a bellows 22 is connected between the end 28 of the stem housing and the sealing member 16. Thus, with the possible exception of the sealing member 16, all of the surfaces that are wetted by the fluid are metal surfaces, and it is noteworthy that no O-rings or sealing glands are used, consistent with the requirement of not introducing any contamination to the fluid.

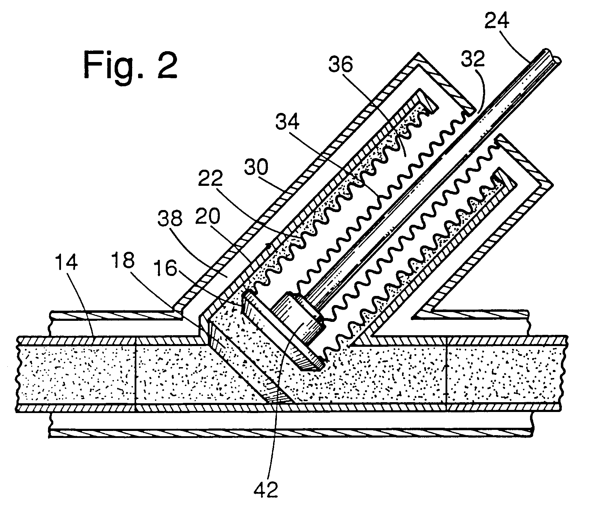

The diagram of Figure 2 illustrates the principle of the present invention, but not the details of its construction.

To provide for double containment, it is apparent that the pipe 14 as well as the valve 12 should be enclosed within an outer shell 30 that is spaced from the enclosed parts.

The possibility of a leak through the bellows 22 suggests that the space within the bellows 22 also needs to be contained. If the use of an O-ring were permitted, it would be a simple matter to use one located at the aperture 32 and encircling the control rod 24. However, since O-rings cannot be used, another approach must be found.

After much deliberation, the inventors arrived at the idea of providing a second bellows 34 within the first bellows 22. So far as can be determined, this approach has never before been employed in a valve. The space 36 between the bellows is in communication with the space 38 between the original valve 12 and the outer shell 30.

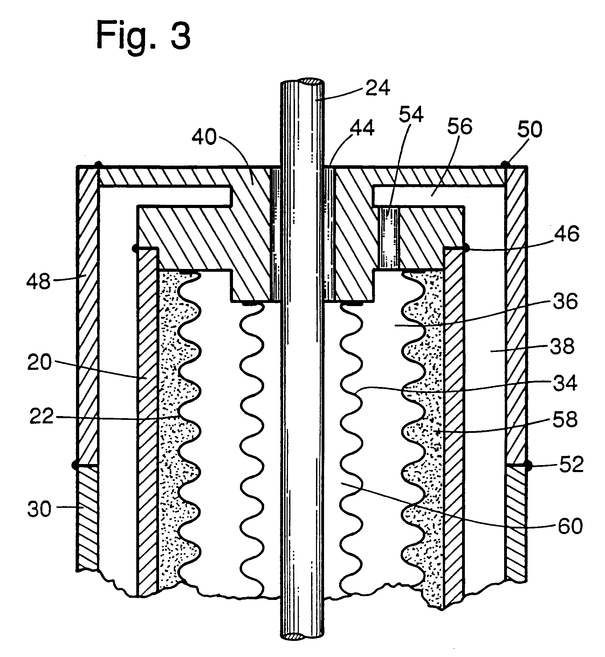

Although this has proven to be a viable solution, the structure shown in Figure 2 is not the way to achieve it, because of the difficulty or impossibility of constructing the structure shown. This posed a severe problem for the present inventors, but one which they eventually solved by means of the structure shown in Figure 3 which is the breakthrough that makes the present invention practical.

Figure 3 shows the way in which the stem housing 20 and outer shell 30 are closed in the preferred embodiment. Because the stem closure 40 makes possible the assembly of the embodiment, the process of assembling the parts will be described.

Initially, the second bellows 34 is welded to the sealing member base 42 of Figure 2, and the first bellows 22 is then also welded to the sealing member base 42. Thereafter, the control rod 24 is inserted through the bore 44 in the stem closure 40, and then the second bellows 34 is welded to the stem closure 40 as shown in Figure 3. Next, the first bellows 22 is also welded to the stem closure 40.

Thereafter, the partial assembly composed of the sealing member base 42, both bellows, and the stem closure 40 is inserted into the stem housing 20, which is already in place, and is welded around the circumference at the weld 46.

The assembly is completed by slipping a cylindrical portion 48 of the outer shell 30 over the stem closure 40 and welding it in place at the welds 50 and 52.

The present inventors found an ingenious way of interconnecting the space 36 between the two bellows with the space 38 between the stem housing 20 and the outer shell 30. An annular undercut 56 is provided in the stem closure 40, and the space 36 between the two bellows is connected with the undercut space 56 by one or more bores, of which the bore 54 is typical.

In summary, the space 58 is wetted by the hazardous fluid. The spaces 36 and 38 may be maintained at a higher or lower pressure than the space 58, as described above, and the space 60 is open to the atmosphere through the bore 44.

As a result of this structure, the hazardous fluid in the space 58 would have to pass through two separate walls of metal before being able to escape into the atmosphere; i.e., the fluid is doubly contained.

Thus, there has been described a structure for a doubly-contained high purity bellows valve that is especially well suited to control the flow of hazardous fluids, such as highly flammable or toxic fluids.

## Claims

1. A sealed valve having a body defining an internal passage and defining a valve seat (18) encircling the internal passage, having a sealing member (16) movable into sealing engagement with the valve seat (16) to block flow of a fluid through the internal passage and movable out of sealing engagement with the valve seat (16) to permit the fluid to flow through the internal passage, said body having an aperture (28), and having a first bellows (22) extending around the aperture (28) in the body, extending into the body and connecting the sealing member (16) to the body to permit motion of the sealing member (16) without resorting to O-rings or packing glands, characterised by comprising:
an outer shell (30) surrounding the body of the sealed valve and having an aperture (32) aligned with the aperture (28) in the body; and,
a second bellows (34) extending around the aperture (32) in the outer shell, extending inside the first bellows (22) and connecting the outer shell (30) to the sealing member (16) so that the outer shell (30) and the second bellows (34) completely enclose the body and the first bellows (22).

## Patentansprüche

1. Abgedichtetes Ventil mit einem Gehäuse, das einen Innenkanal, einen den Innenkanal umgebenden Ventilsitz (18) und ein Dichtungselement (16) aufweist, das in dichtenden Eingriff mit dem Ventilsitz (16) bewegbar ist, um den Durchfluß eines Strömungsmittels durch den Innenkanal zu blockieren, und das aus dem dichtenden Eingriff mit dem Ventilsitz (16) herausbewegbar ist, um einen Durchfluß des Strömungsmittels durch den Innenkanal zu ermöglichen, wobei das Gehäuse mit einer Öffnung (28) und mit einem ersten Balg (22) versehen ist, der sich um die Öffnung (28) im Gehäuse erstreckt, sich in das Gehäuse hinein erstreckt und das Dichtungselement (16) mit dem Gehäuse verbindet, um eine Bewegung des Dichtungselementes (16) ohne Anwendung von O-Ringen oder Stopfbüchsenpackungen zu ermöglichen, gekennzeichnet durch
eine äußere Ummantelung (30), die das Gehäuse des abgedichteten Ventils umgibt und eine mit der Öffnung (28) im Gehäuse ausgerichtete Öffnung (32) aufweist; und
einen zweiten Balg (34), der sich um die Öffnung (32) in der äußeren Ummantelung herum innerhalb des ersten Balges (22) erstreckt und die äußere Ummantelung (30) mit dem Dichtungselement (16) verbindet, so daß die äußere Ummantelung (30) und der zweite Balg (34) das Gehäuse und den ersten Balg (22) vollständig umschließen.

## Revendications

1. Un robinet étanche a soupape présentant un corps définissant un passage interne et définissant un siège de soupape (18) entourant le passage interne, présentant un organe d'étanchéité mobile (16) en contact d'étanchéité avec le siège de soupepe (18) pour bloquer l'écoulement d'un fluide à travers le passage interne et mobile hors de contact d'étanchéité avec le siège de soupape (18) pour permettre au fluide de s'écouler à travers le passage interne, ledit corps présentant une ouverture (28) et présentant un premier soufflet (22) s'étendent autour de l'ouverture (28) du corps, s'étendant dans le corps et relient l'organe d'étanchéité (16) au corps pour permettre le mouvement de l'organe d'étanchéité (16) sans recourir à des joints toriques ou à des presse-étoupes, caractérisé en ce qu'il comprend :
une enveloppe externe (30) entourent le corps du robinet étanche à soupape et présentant une ouverture (32) alignée avec l'ouverture (28) du corps ; et
un second soufflet (34) s'étendant autour de l'ouverture (32) de l'enveloppe externe, s'étendant à l'intérieur du premier soufflet (22) et reliant l'enveloppe externe (30) à l'organe d'étanchéité (16) de sorte que l'enveloppe externe (30) et le second soufflet (34) entourent complètement le corps et le premier soufflet (22).
